# EUROPEAN PATENT SPECIFICATION

(11) **EP 1 043 151 B1**
(45) Date of publication and mention of the grant of the patent: **26.07.2006**
(21) Application number: 00107120.8
(22) Date of filing: 07.04.2000
(51) Int. Cl.: B32B 27/32, B41M 7/00

(54) **Film for thermal laminate**
Folie für thermischen Verbundwerkstoff
Feuille pour laminé thermique

(30) Priority: 08.04.1999 JP 10103099
(43) Date of publication of application: 11.10.2000
(73) Proprietor: Japan Polychem Corporation, Tokyo 100-0006 (JP); WADA CHEMICAL INDUSTRY CO., LTD., Chiyoda-ku, Tokyo (JP)
(72) Inventor: Yamashita, Takashi, Japan Polychem Corporation, Yokkaichi-shi, Mie (JP)
(74) Representative: Vossius & Partner

(56) References cited:
- EP-A- 0 508 165
- US-A- 5 175 049

## Description

The present invention relates to a film for thermal laminate which is adapted to be heat-bonded to the surface of e.g. a printing paper to protect the surface of the printed matter.

It is widely practiced to laminate a film on a printing paper for the purpose of protecting the surface of the printing paper, rendering the printing paper water-resistant or oil-resistant or improving the surface gloss of the printing paper. The film for thermal laminate to be used for these purposes usually comprises a stretched polypropylene film as a substrate film and a solvent type ethylene-vinyl acetate copolymer-based adhesive as an adhesive therefor. However, since the foregoing method involving the use of a solvent type adhesive requires the handling of a solvent, particular attention should be given to recovery of solvent or working atmosphere. Further, the foregoing method usually requires the use of a hardener, it is necessary to take into account pot life.

An example of the method for the preparation of a laminate film free from organic solvent or adhesive is a method which comprises laminating a biaxially-stretched polypropylene laminate film provided with a heat-sensitive adhesive layer made of a mixture of two or more of ethylene-alkylester copolymers and ethylene-vinyl acetate copolymers, with a printing paper only by a heat-bonding process in such an arrangement that the heat-sensitive adhesive surface of the laminate film and the adhesive surface of the printing paper were opposed to each other (JP-A-56-42652 (The term "JP-A" as used herein means an "unexamined published Japanese patent application"), JP-B-4-2431 (The term "JP-B" as used herein means an "examined Japanese patent application"), JP-A-3-73341). However, since the heat-sensitive adhesive layer comprises as an ethylene copolymer resin one having a maximized content of functional monomer to meet the requirement for ease adhesion to the printed surface, the resulting laminated film exhibits deteriorated lubricating properties and blocking resistance. Thus, the laminated film can be less easily released from the roll or can be wrinkled during production. Further, when the laminated film is carried or stored in a wound form, the substrate and the ethylene copolymer resin which have been superimposed on each other are stuck to each other. Thus, when the laminated film is unwound before being laminated on the printed surface, the resulting raised lamination tension causes the laminated film to be elongated or broken.

A further example of the foregoing lamination method is one which comprises laminating a laminated film, in which a resin containing an ethylene resin in a straight-chain ethylene-α-olefin copolymer obtained in the presence of a metallocene compound as a catalyst is laminated on a substrate, on a printing paper, only by heat-bonding process, so that a thermal laminate product is produced (JP-A-7-117197). However, this laminated film exhibits a deteriorated cuttability during print lamination. Further, since this method involves the use of a single straight-chain ethylene-α-olefin copolymer, surging occurs during extrusion lamination, making it impossible to form film.

EP-A-0 508 165 describes a stretched polyethylene multilayer film prepared by stretching several times a laminated film comprising at least one layer of an ethylene-α-olefin copolymer (A) having a melt index of not less than 6 g/10 min and not more than 50 g/10 min and at least one layer of an ethylene-α-olefin copolymer (B) having a melt index of not less than 0.1 g/10 min and less than 6 g/10 min. In a preferred embodiment, a stretched polyethylene multilayer film is described which is made of two outer layers of the ethylene-α-olefin copolymer (A) and one intermediate layer of the ethylene-α-olefin copolymer (B).

US 5,175,049 relates to a wrap-packaging film having differential cling properties which is provided by a film laminate comprising at least two layers. At least one of said layers is an outer reverse layer comprising a linear very low density ethylene copolymer which contains a tackifier in an amount sufficient to impart an effective level of cling properties to the layer, and at least one of said layers is an obverse layer comprising a linear low density ethylene copolymer. The obverse layer and reverse layer may be the outside layers of a laminate comprising at least three layers.

It is an object of the invention to provide a film for thermal laminate which is prepared by co-extruding two kinds of resins into two layers so that no surging occurs during extrusion lamination, a stabilized film can be formed, print lamination can be effected at a low temperature, the resulting thermal laminate undergoes no discoloration of printing ink or no curling, the laminated film exhibits an improved cuttability during print lamination, no odor of solvent is generated during print lamination, no apparatus for removing and recovering the solvent is required, there is no necessity of taking into account pot life, no wrinkling occurs during the production of film, and the laminated film undergoes no elongation or breakage during print lamination.

This object could be achieved on the basis of the finding that by laminating a specific ethylene resin on one side of a thermoplastic resin film substrate and then heat-bonding a specific straight-chain ethylene-α-olefin copolymer layer to the ethylene resin layer in such an arrangement that it comes in contact with the printed surface of a printed matter, a stable film can be formed which can be laminated on the printed surface of a printed matter at a low temperature, can prevent the printed matter from being curled, can be cut more easily during lamination and can be prevented from undergoing surging during extrusion lamination.

The present invention is directed to the use of a film for thermal laminate which comprises a first additional layer comprising a resin (A) provided in contact with one side of a thermoplastic resin film substrate and a second additional layer comprising a resin (B) laminated thereon:
Resin (A): Ethylene resin having a density of from 0.900 to 0.960 g/cm³ and MFR of from 1 to 100 g/10 minutes; and
Resin (B): Straight-chain ethylene-α-olefin copolymer having a density of from 0.870 to 0.910 g/cm³ and MFR of from 1 to 100 g/10 minutes obtained by the copolymerization of ethylene with an α-olefin having 3 to 12 carbon atoms, wherein the thermoplastic resin film substrate is a stretched or unstretched film of thermoplastic resin such as polypropylene, polyethylene terephthalate, polyvinyl chloride and polystyrene.

The present invention will be further described hereinafter.

The thickness of the substrate film is preferably from 6 to 100 µm, more preferably from 7 to 40 µm. The thermoplastic resin film substrate may comprise a lubricant, an anti-blocking agent, a stabilizer, an oxidation inhibitor, an antistatic agent, an anti-fogging agent, a colorant and other additives incorporated therein. 2. Adhesive resin layer

The resin layer to be laminated on the surface of the foregoing thermoplastic resin film substrate comprises the following ethylene resin (A) layer as a first additional layer and straight-chain ethylene-α-olefin copolymer (B) layer as a second additional layer laminated thereon:

### (A) Ethylene resin

The ethylene resin to be used herein exhibits a density of from 0.900 to 0.960 g/cm³, preferably from 0.905 to 0.950 g/cm³, particularly from 0.915 to 0.945 g/cm³ (as determined by process A according to JIS K7112). When the density of the ethylene resin falls below 0.900 g/cm³, the resulting laminating film exhibits a deteriorated cuttability during lamination. On the contrary, when the density of the ethylene resin exceeds 0.960 g/cm³, the adhesion between the ethylene resin (A) layer and the resin (B) layer described later is deteriorated. Further, the external appearance of thermal laminate is marred (obscured). The thermal laminate can also be easily curled.

The ethylene resin exhibits MFR of from 1 to 100 g/10 minutes, preferably from 2 to 80 g/10 minutes, as determined under Condition 4 according to JIS K7210. When MFR of the ethylene resin falls outside the above defined range, the resulting ethylene resin exhibits too high or low a melt viscosity and hence a deteriorated formability.

Examples of the ethylene resin employable herein include the following compounds:
(a) Branched high pressure process low density polyethylene, and copolymer resin obtained by the copolymerization of ethylene with a monomer copolymerizable therewith, e.g., vinyl acetate, acrylic acid, methyl acrylate, ethyl acrylate and methacryl methacrylate. Specific examples of these resins include ethylene-vinyl acetate copolymer, ethylene-acrylic acid copolymer, ethylene-methyl acrylate copolymer, and ethylene-ethyl acrylate copolymer. These resins may be used singly or in combination of two or more thereof.
(b) A mixture of low pressure process high density polyethylene with 1% by weight or more of at least one of the resins listed in the group (a).
(c) A mixture of a straight-chain ethylene-α-olefin copolymer obtained by the copolymerization of ethylene with a C₄₋₁₂ α-olefin (α-olefin having 4 to 12 carbon atoms) with 1% by weight or more of at least one of the resins listed in the group (a).
(d) A mixture of a straight-chain ethylene-α-olefin copolymer obtained by the copolymerization of ethylene with a C₄₋₁₂ α-olefin in the presence of a metallocene compound as a polymerization catalyst with 1% by weight or more of at least one of the resins listed in the group (a).

### (B) Straight-chain ethylene-α-olefin copolymer

The straight-chain ethylene-α-olefin copolymer to be used as the resin layer (B) of the invention is a copolymer obtained by the copolymerization of ethylene with at least one C₃₋₁₂ α-olefin.

Specific examples of such a copolymer include bicopolymer obtained by the copolymerization of ethylene with one C₃₋₁₂ α-olefin and tercopolymer obtained by the copolymerization of ethylene with two C₃₋₁₂ α-olefins.

Specific examples of the C₃₋₁₂ α-olefin include propylene, 1-butene, 1-hexene, 1-heptene, 1-octene, 1-decene, and 1-dodecene. These C₃₋₁₂ α-olefins may be used singly or in combination.

Preferred examples of the straight-chain ethylene-α-olefin copolymer include ethylene-propylene copolymer, ethylene-1-butene copolymer, ethylene-1-hexene copolymer, ethylene-1-octene copolymer, ethylene-propylene-1-butene copolymer, and ethylene-propylene-1-hexene copolymer.

The straight-chain ethylene-α-olefin copolymer exhibits a density of from 0.870 to 0.910 g/cm³, preferably from 0.875 to 0.900 g/cm³, as determined by process A according to JIS K7112. When the density of the straight-chain ethylene-α-olefin copolymer falls below 0.870 g/cm³, the resulting straight-chain ethylene-α-olefin copolymer exhibits a deteriorated formability and a deteriorated blocking resistance that can cause the laminating film to be elongated or broken during print lamination. On the contrary, when the density of the straight-chain ethylene-α-olefin copolymer exceeds 0.910 g/cm³, the resulting laminating film exhibits a deteriorated adhesion to the printed surface of the printed matter and mars the external appearance of thermal laminate (obscured image).

The straight-chain ethylene-α-olefin copolymer exhibits MFR of from 1 to 100 g/10 minutes, preferably from 2 to 80 g/10 minutes, as determined under Condition 4 according to JIS K7210. When MFR of the ethylene resin falls outside the above defined range, the resulting ethylene resin exhibits too high or low a melt viscosity and hence a deteriorated formability. On the contrary, when MFR of the ethylene resin falls below 1 g/10 minutes, the external appearance of thermal laminate is marred (obscured).

The straight-chain ethylene-α-olefin copolymer to be used herein can be prepared by the polymerization of the foregoing monomers in the presence of a known titanium-based catalyst or metallocene catalyst. The straight-chain ethylene-α-olefin copolymer is preferably a copolymer prepared by high pressure ion polymerization, gas phase polymerization or solution polymerization in the presence of, as a polymerization catalyst, a metallocene compound, particularly a metallocene catalyst having the following physical properties.

The straight-chain ethylene-α-olefin copolymer is preferably eluted at a temperature of 80°C or lower in an amount of 90% by weight or more based on the total weight of the copolymer, as determined by temperature rising elution fractionation (TREF) method.

The measurement of the amount eluted by TREF (temperature rising elution fractionation) is carried out according to the principle described in "Journal of Applied Polymer Science", Vol. 26, pp. 4,217 - 4,231, 1981, and "Koubunshi Ronbunshu (Theses of High Molecular Compounds)", 2P1C09, 1985, in the following manner.

In some detail, the polymer to be measured is completely dissolved in a solvent. Thereafter, the solution is cooled so that a thin polymer layer is formed on the surface of an inert carrier. The polymer layer thus formed comprises an inner layer (layer close to the surface of the inert carrier) made of a polymer which can be easily crystallized and a surface layer made of a polymer which can be hardly crystallized. When the ambient temperature is raised continuously or stepwise, the polymer layer undergoes elution beginning with the amorphous portion in the polymer composition to be measured, i.e., portion having many short-chain branches, in the low temperature stage. When the ambient temperature gradually rises, the degree of branching of the polymer portion thus eluted decreases. Eventually, a straight-chain polymer portion free of branches is eluted. Thus, measurement is terminated. The concentration of the component eluted at the various temperatures is detected. The graph made by plotting the amount eluted vs. the elution temperature gives the composition distribution of polymer.

As the straight-chain ethylene-α-olefin copolymer there may be also used one obtained by graft polymerization of e.g. maleic anhydride or styrene.

The straight-chain ethylene-α-olefin copolymer may further comprise a lubricant, an anti-blocking agent, a stabilizer, an antistatic agent, an anti-fogging agent, a colorant, a low molecular polymer and other various additives incorporated there as necessary.

### 3. Thickness of adhesive resin layer

Referring to the thickness of the foregoing adhesive resin layer, the sum of the thickness of the resin layer (A) and the resin layer (B) is 6 µm or more, preferably from 7 to 80 µm. The ratio of the thickness of the resin layer (A) to the resin layer (B) is not limited. In practice, however, it is preferably from 5 : 1 to 1 : 1.

### 4. Film for thermal laminate

The film for thermal laminate according to the invention is obtained by laminating a resin layer (A) as a first additional layer on one side of a thermoplastic film substrate, and then laminating a resin layer (B) as a second additional layer on the resin layer (A). Examples of the method for the preparation of the film for thermal laminate according to the invention include a tandem extrusion coating method which comprises laminating a resin layer (A) on the substrate, and then laminating a resin layer (B) on the resin layer (A); a sandwich lamination method which comprises laminating a resin layer (B) with a molten resin layer (A) ; a method which comprises dry-laminating a two-layer film consisting of resins (A) and (B); and a two-layer ((A) and (B)) melt co-extrusion coating method. Preferred among these lamination methods is the two-layer co-extrusion lamination method, which allows the formation of a thin film at a high speed. In the case where the two-layer co-extrusion lamination method is used, the working temperature is from 150°C to 300°C, preferably from 200°C to 280°C. The interface of the thermoplastic resin film substrate with the resin layer (A) is preferably subjected to ozone treatment.

In the case where the resins (A) and (B) are subjected to two-layer melt co-extrusion lamination, the thermoplastic resin film substrate is preferably subjected to surface treatment such as corona treatment or coated with an anchor coat.

The film for thermal laminate thus obtained is then preferably subjected to oxidation such as corona treatment and ozone treatment on the surface of the resin layer (B) to improve its adhesion to the printed surface of the printed matter. In particular, corona treatment is the most simple and effective.

The present invention will be further described in the following examples, but the present invention should not be construed as being limited thereto. The characteristics of the laminating film used in the examples, the method for the evaluation of the characteristics of the thermal laminate in the examples, and the resins used in the examples are as follows.

### 1. Evaluation methods

### (1) Workability:

The molten resin which has been extruded through a T-die at a take-off speed of 200 m/min. to a lamination thickness (total thickness if there are two layers) of 15 µm is observed for the occurrence of surging (thickness change of ± 5 µm or more in the flowing direction). For the evaluation of surging, the following criterion is used.
Good: No surging occurs
Poor: Surging occurs, making it difficult to form film

### (2) Blocking resistance:

A biaxially stretched film having a width of 21 cm and a length of 29 cm and a laminating film having the same size are superimposed on each other in such an arrangement that the surface of the biaxially stretched film is opposed to the corona-treated surface of the laminating film. The laminate is then allowed to stand in a 60°C oven under a load of 0.05 kg/cm² over an area having a width of 15 cm and a length of 20 cm for 24 hours. The laminated film is then cut to an area of 10 cm² (width: 2 cm; length: 5 cm) to be subjected to peeling. The load required to peel the films off from each other at a pulling rate of 500 mm/minute by a tensile testing machine is then measured. The smaller the load value thus measured is, the better is the blocking resistance. For the evaluation of blocking resistance, the following criterion is used.
- X:: Peeling load of 2 kg/10 cm² or more (laminated film breaks)
- Δ:: Peeling load of 1.5 to less than 2 kg/10 cm² (laminated film is fully elongated)
- ○:: Peeling load of 1.0 to less than 1.5 kg (laminated film is elongated but recovered)
- ⊚:: Peeling load of less than 1.0 kg

### (3) Gloss and obscured image:

For the measurement of gloss, a Type UGV-5DP glossmeter produced by Suga Test Instruments Co., Ltd. is used. In some detail, the printed area of the thermal laminate is measured at an angle of 20 degrees. For the measurement of obscured image (adhesion between the printing paper and the laminating resin), the external appearance of the printed matter is visually observed for obscured image. For the evaluation of obscured image, the following criterion is used.
- ○:: No residual air, sharp printing color
- Δ:: Air remains on the printing color in stripes or spots
- X:: Air remains on the printing color in the form of belt, obscuring the printing color

### (4) Adhesive strength:

The thermal laminate is cut to specimens having a width of 25 mm and a length of 100 mm. The laminating films are then peeled off from each other over a length of 50 mm. The tensile strength required to peel the laminating films off from each other at an angle of 180 degrees at a pulling rate of 300 mm/minutes by a tensile testing machine produced by a tensile testing machine produced by Shimadzu Corp. is then measured.

### (5) Tunneling:

For the measurement of tunneling, 100 µl of gas oil is dropped through a syringe onto the thermal laminate on the side thereof free of printing paper. The specimen is then allowed to stand at a temperature of 23°C and a humidity of 50% for 24 hours. The resulting change of the surface conditions of the laminated film is then observed. For the evaluation of tunneling, the following criterion is used.
- ⊚:: No problems of adhesive strength and external appearance
- ○:: Slight drop of adhesive strength, but no change of of external appearance (acceptable level)
- Δ:: Slightly obscured image
- X:: Tunneling occurs explicitly

### (6) Elmendorf tear strength:

The thermal laminate is subjected to tear test for plastic film and sheet according to Elmendorf tear testing method (process B according to JIS K7128).

### (7) TREF:

For TREF (temperature rising elution fractionation), the polymer is dissolved at a high temperature, and then cooled so that a thin polymer layer is formed on the surface of an inactive carrier. The ambient temperature is then raised continuously or stepwise. The component thus eluted is recovered, and continuously detected for concentration. The graph obtained by plotting the amount eluted vs. the elution temperature (elution curve) is then observed for peaks from which the composition distribution of polymer is then determined.

The foregoing elution curve is determined as follows. For the measurement of elution, a Type CFC T101 cross fractionating apparatus produced by Dia Instrument Inc. is used. The cross fractionating apparatus comprises an on-line combination of a temperature rising elution fractionating (TREF) mechanism for fractionating a specimen utilizing the difference of dissolution temperature and a size exclusion chromatography (SEC) for further fractionating the fractions by molecular size.

The sample to be measured (ethylene-α-olefin random copolymer) is dissolved in a solvent (o-diclorobenzene) at a temperature of 140°C to a concentration of 3 mg/ml. The sample solution is then injected into a sample loop in the measuring instrument. The following measurement is automatically carried out under predetermined conditions. 0.4 ml of the sample solution retained in the sample loop is then injected into a TREF column (attached stainless steel column having an inner diameter of 4 mm and a length of 150 mm filled with glass beads as inert carrier) for fractionating by the use of the difference of dissolution temperature. Subsequently, the sample is cooled at a rate of 1°C from 140°C to 0°C so that the inert carrier is coated with the sample. In this manner, a polymer layer is formed on the surface of the inert carrier beginning with a high crystallizability component (easily crystallized) and then with a low crystallizability component (hardly crystallized). The TREF column is then held at a temperature of 0°C for 30 minutes. 2 ml of the component which is dissolved at a temperature of 0°C is then injected into SEC columns (AD806MS, produced by Showa Denko K.K.; three units are used) from the TREF column at a flow rate of 1 ml/minutes. While fractionating by molecular size is being effected in SEC, the TREF column temperature is raised to the subsequent elution temperature (5°C) where it is then kept for about 30 minutes. The measurement of fraction eluted at the various temperatures in SEC is effected at a time interval of 39 minutes. The elution temperature is raised stepwise as follows:
0°C, 5°C, 10°C, 15°C, 20°C, 25°C, 30°C, 35°C, 40°C, 45°C, 49°C, 52°C, 55°C, 58°C, 61°C, 64°C, 67°C, 70°C, 73°C, 76°C, 79°C, 82°C, 85°C, 88°C, 91°C, 94°C, 97°C, 100°C, 102°C, 120°C, 140°C

The solution fractionated by molecular size in SEC columns is then measured for absorbance proportional to the polymer concentration by an attached infrared spectrophotometer (detected at a wavelength of 3.42 µm with stretching vibration of methylene) to obtain chromatogram of fractions eluted at the various temperatures. Using a built-in data processing software, the base line of chromatogram of fractions eluted at the various temperatures is drawn. These data are then processed in operation. The areas of these chromatograms are integrated to obtain integrated elution curve. The integrated elution curve is then differentiated by temperature to obtain differentiated elution curve.

### 2. Samples

### (A) Ethylene resin constituting the resin layer

### (1) Low density polyethylene (LDPE):

Novatech LD LC701, produced by Japan Polychem Corporation (MFR: 14 g/10 minutes; density: 0.918 g/cm³)

### (2) Ethylene-vinyl acetate copolymer (EVA):

Novatech EVA LV260, produced by Japan Polychem Corporation (MFR: 8.5 g/10 minutes; vinyl acetate content: 6.0%)

### (3) Straight-chain low density polyethylene (LLDPE):

Novatech LL UC470, produced by Japan Polychem Corporation (MFR: 12 g/10 minutes; density: 0.924 g/cm³)

### (4) High density polyethylene (HDPE):

Novatech HD LY20, produced by Japan Polychem Corporation (MFR: 8 g/10 minutes; density: 0.941 g/cm³)

### (B) Straight-chain ethylene-α-olefin copolymer

### (1) Synthesis of ethylene-1-hexene copolymer (LLDPE-1)

To 2.0 mmol of ethylenebis(4,5,6,7-tetrahydroindenyl) zirconium dichloride as a complex was then added methyl almoxane produced by Toyo Stowfer Co., Ltd. in an amount of 1,000 mols per mol of the catalyst. The mixture was then diluted with toluene to make 10 1 to prepare a catalyst solution. The catalyst solution thus obtained was then put into an agitated autoclave type continuous reaction vessel having an inner capacity of 1.5 l. Into the reaction vessel was then supplied a mixture of ethylene and 1-hexene in such an amount that the concentration of 1-hexene was 81% by weight. The reaction mixture was then allowed to undergo reaction at a temperature of 175°C while the pressure in the reaction vessel was being kept at 2,200 kg/cm² to obtain a straight-chain ethylene-1-hexene copolymer (LLDPE-1) having MFR of 31 g/10 minutes, a density of 0.892 g/cm³ and a melting peak temperature of 80°C which is eluted in an amount of 100% at a temperature of 80°C or lower as determined by temperature rising elution fractionating (TREF).

### (2) Synthesis of ethylene-1-hexene copolymer (LLDPE-2)

The catalyst solution used in the synthesis of LLDPE-1 was put into an agitated autoclave type continuous reaction vessel having an inner capacity of 1.5 l. Into the reaction vessel was then supplied a mixture of ethylene and 1-hexene in such an amount that the concentration of 1-hexene was 86% by weight. The reaction mixture was then allowed to undergo reaction at a temperature of 150°C while the pressure in the reaction vessel was being kept at 2,200 kg/cm² to obtain a straight-chain ethylene-1-hexene copolymer (LLDPE-2) having MFR of 9 g/10 minutes, a density of 0.881 g/cm³ and a melting peak temperature of 60°C which is eluted in an amount of 100% at a temperature of 80°C or lower as determined by temperature rising elution fractionating (TREF). ,

### EXAMPLES 1-2

(1) As the resin layer (A) there was used LDPE. As the resin layer (B) there was used LLDPE-1 or LLDPE-2. The two resins were each mixed thoroughly with 0.5% by weight of a phenolic stabilizer by a blender. The two resins were each then melt-extruded so that they were pelletized to form laminating resins.
(2) The foregoing laminating resins LDPE (A) and (B) were then melt co-extruded through T-dies mounted on extruders having bore diameters of 90 mm and 65 mm, respectively, at a resin temperature of 250°C into films having a width of 500 mm and a thickness of 10 µm and 5 µm, respectively, in such a manner that the resin layer (A) is opposed to the substrate.
(3) Subsequently, a biaxially-stretched polypropylene film (OPP) [LOF2 (trade name), produced by Hutamura Chemical Industries, Ltd.] was discharged from the substrate delivery portion of the extrusion lamination apparatus. The film was coated with an anchor coat on one side thereof, and then dried. Ozone treatment was then made on the interface of the coated surface of the stretched film with the resin layer (A) which had been extruded in the form of film together with the resin layer (B). The laminate was then subjected to pressure lamination through the gap between a surface-matted cooling roll and a compression rubber roll. The laminate was then subjected to corona discharge treatment on the surface of the resin layer (B) at 20W.min/m² to obtain a laminated film. The workability during the foregoing procedure and the results of evaluation of laminated film are set forth in Table 1.
(4) Subsequently, the laminated film thus obtained and an offset-printed art paper were subjected to thermocompression bonding at a roll temperature of 70°C, 80°C and 100°C, a linear pressure of 55.6 kg and a rate of 30 m/min. in such an arrangement that the corona-discharged surface of the laminated film was opposed to the art paper by a press to obtain a thermal laminate.
(5) The results of evaluation of gloss of the thermal laminate thus obtained, adhesive strength of the thermal laminate to the printed art paper and tunneling of the thermal laminate with respect to the printed art paper are set forth in Table 2.

### EXAMPLE 3

A laminated film and a thermal laminate were prepared in the same manner as in Example 1 except that as the resin layer (A) and the resin layer (B) there were used EVA and LLDPE-1, respectively, which were then melt co-extruded through T-dies mounted on extruders having bore diameters of 90 mm and 65 mm, respectively, at a resin temperature of 240°C into a film having a width of 500 mm and a thickness of 10 µm and 5 µm, respectively, in such an arrangement that the resin layer (A) is opposed to the substrate. The results of evaluation of the laminated film and thermal laminate are set forth in Tables 1 and 2.

### EXAMPLE 4

A laminated film and a thermal laminate were prepared in the same manner as in Example 1 except that as the resin layer (A) and the resin layer (B) there were used LLDPE and LLDPE-1, respectively, which were then melt co-extruded through T-dies mounted on extruders having bore diameters of 90 mm, and 65 mm, respectively, at a resin temperature of 250°C into a film having a width of 500 mm and a thickness of 10 µm and 5 µm, respectively, in such an arrangement that the resin layer (A) is opposed to the substrate. The results of evaluation of the laminated film and thermal laminate are set forth in Tables 1 and 2.

### EXAMPLE 5

A laminated film and a thermal laminate were prepared in the same manner as in Example 1 except that as the resin layer (A) and the resin layer (B) there were used HDPE and LLDPE-1, respectively, which were then melt co-extruded through T-dies mounted on extruders having bore diameters of 90 mm and 65 mm, respectively, at a resin temperature of 250°C into a film having a width of 500 mm and a thickness of 10 µm and 5 µm, respectively, in such an arrangement that the resin layer (A) is opposed to the substrate. The results of evaluation of the laminated film and thermal laminate are set forth in Tables 1 and 2.

### COMPARATIVE EXAMPLE 1

(1) LLDPE-1 was mixed thoroughly with 0.5% of a phenolic stabilizer by a blender. The resin was then melt-extruded into pellets to form a laminating resin.
(2) The foregoing laminating resin was then melt-extruded through a T-die mounted on an extruder having a bore diameter of 90 mm at a resin temperature of 250°C into a film having a width of 500 mm and a thickness of 15 µm.
(3) A laminated film and a thermal laminate were then prepared in the same manner as in Example 1. The results of evaluation of the laminate film and thermal laminate are set forth in Tables 1 and 2.

### COMPARATIVE EXAMPLE 2

A laminated film and a thermal laminate were prepared in the same manner as in Comparative Example 1 except that a resin composition comprising 90% by weight of LLDPE-1 and 10% by weight of LDPE was mixed thoroughly with 0.5% by weight of a phenolic stabilizer by a blender, and then melt-extruded into pellets to form a laminating resin. The results of evaluation of the laminated film and the thermal laminate are set forth in Tables 1 and 2.

### COMPARATIVE EXAMPLE 3

A laminated film and a thermal laminate were prepared in the same manner as in Comparative Example 1 except that as the laminating resin there was used an ethylene-vinyl acetate copolymer (EVA, "Novatech EVA LV570", produced by Japan Polychem Corporation; MFR: 15 g/10 min.; vinyl acetate content: 20% by weight) and the melt extrusion temperature was changed to 240°C. The results of evaluation of the laminated film and the thermal laminate are set forth in Tables 1 and 2.

**Table 1**

| | | Substrate (µm) | Extrusion temperature (°C) | Adhesive layer resin | | | Laminated film | |
|---|---|---|---|---|---|---|---|---|
| | | | | Resin layer (A)/thickness (µm) | Resin layer (B)/thickness (µm) | Total thickness (µm) | Workability | Blocking resistance |
| Example | 1 | OPP/15 | 250 | LDPE/10 | LLDPE-1/5 | 15 | Good | ⊚ |
| | 2 | OPP/15 | 250 | LDPE/10 | LLDPE-2/5 | 15 | Good | ⊚ |
| | 3 | OPP/15 | 240 | EVA/10 | LLDPE-1/5 | 15 | Good | ⊚ |
| | 4 | OPP/15 | 250 | LLDPE/10 | LLDPE-1/5 | 15 | Good | ⊚ |
| | 5 | OPP/15 | 250 | HDPE/10 | LLDPE-1/5 | 15 | Good | ⊚ |
| Comparative Example | 1 | OPP/15 | 250 | LLDPE-1/15 | | 15 | Poor | - |
| | 2 | OPP/15 | 250 | LLDPE-1/90wt-%; | | 15 | Good | ⊚ |
| | | | | LDPE/10wt-%/15 | | | | |
| | 3 | OPP/15 | 240 | EVA (LV570)/15 | | 15 | Good | ○ |

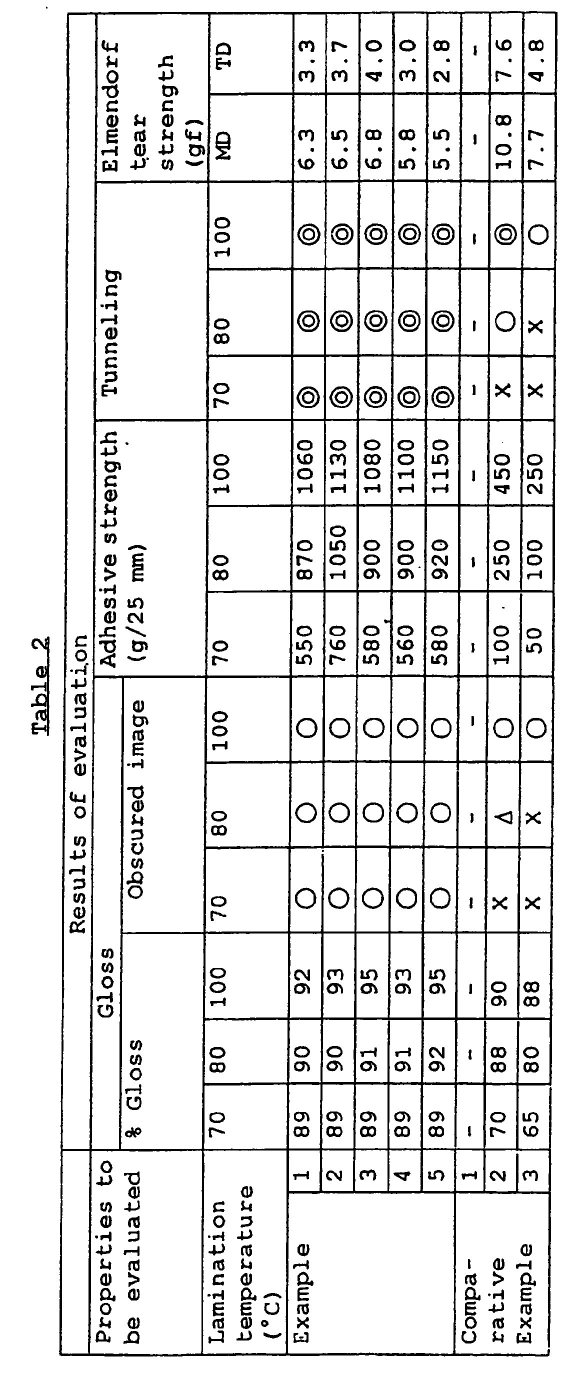

The film for thermal laminate according to the invention comprises two adhesive resin layers laminated on a thermoplastic resin film substrate. The resin (B) constituting the adhesive layer which is heat-bonded to the printed surface of the printed matter exhibits a melting peak temperature of as low as 102°C or lower, preferably 92°C or lower, as determined by differential scanning calorimetry (DSC). Thus, the film for thermal laminate according to the invention can laminate the printed surface of the printed matter at a low temperature. The resulting thermal laminate can be prevented from undergoing discoloration of printing ink and being curled. The laminated film has an improved cuttability during print lamination. Further, by allowing the resin layer (A) and the resin layer (B) to be co-extruded, surging can be prevented during extrusion lamination, making it possible to effect stabilized film formation.

## Claims

1. Use of a film, which comprises a thermoplastic resin film substrate, a first additional layer comprising a resin (A), and a second additional layer comprising a resin (B),in this order, as a film for thermal laminate;
wherein the resin (A) is an ethylene resin having a density of 0.900 to 0.960 g/cm³ and an MFR of 1 to 100 g/10 minutes, and the resin (B) is a straight-chain ethylene-α-olefin copolymer having a density of 0. 870 to 0.910 g/cm³ and an MFR of 1 to 100 g/10 minutes, .the straight-chain ethylene-α-olefin copolymer being a copolymer of ethylene with at least one α-olefin having 3 to 12 carbon atoms; and
wherein the thermoplastic resin film substrate is a stretched or unstretched film of thermoplastic resin.

2. The use of a film according to Claim 1, wherein the straight-chain ethylene-α-olefin copolymer in the second additional layer is eluted at a temperature of 80°C or lower in an amount of 90% by weight or more based on the total weight of the copolymer, as determined by temperature rising elution fractionation (TREF) method.

3. The use of a film according to Claim 1 or 2, wherein the straight-chain ethylene-α-olefin copolymer in the second additional layer is polymerized using a metallocene compound as a polymerization catalyst.

4. The use of a film according to any one of Claims 1 to 3, wherein the straight-chain ethylene-α-olefin copolymer is an ethylene/propylene copolymer, an ethylene/1-butene copolymer, an ethylene/1-hexene copolymer, an ethylene/1-octene copolymer, an ethylene/propylehe/1-butene copolymer, or an ethylene/propylene/1-hexene copolymer.

## Patentansprüche

1. Verwendung einer Folie, umfassend einen thermoplastischen Harzfolienträger, eine erste zusätzliche Schicht, umfassend ein Harz (A), und eine zweite zusätzliche Schicht, umfassend ein Harz (B), in dieser Reihenfolge, als eine Folie für einen thermischen Verbundstoff;
wobei das Harz (A) ein Ethylenharz mit einer Dichte von 0,900 bis 0,960 g/cm³ und einem Schmelzindex von 1 bis 100 g/10 min. ist, und das Harz (B) ein geradkettiges Ethylen-α-Olefin-Copolymer mit einer Dichte von 0,870 bis 0,910 g/cm³ und einem Schmelzindex von 1 bis 100 g/10 min. ist, wobei das geradkettige Ethylen-α-Olefin-Copolymer ein Copolymer von Ethylen mit mindestens einem α-Olefin mit 3 bis 12 Kohlenstoffatomen ist; und
wobei der thermoplastische Harzfolienträger eine gestreckte oder nicht gestreckte Folie eines thermoplastischen Harzes ist.

2. Verwendung einer Folie nach Anspruch 1, wobei das geradkettige Ethylen-α-Olefin-Copolymer in der zweiten zusätzlichen Schicht bei einer Temperatur von 80 °C oder niedriger in einer Menge von 90 Gew.-% oder mehr, bezogen auf das Gesamtgewicht des Copolymers, eluiert wird, wie durch ein Eluierfraktionierungsverfahren bei steigender Temperatur (TREF) bestimmt.

3. Verwendung einer Folie nach Anspruch 1 oder 2, wobei das geradkettige Ethylen-α-Olefin-Copolymer in der zweiten zusätzlichen Schicht unter Verwendung einer Metallocenverbindung als Polymerisationskatalysator polymerisiert wird.

4. Verwendung einer Folie nach einem der Ansprüche 1 bis 3, wobei das geradkettige Ethylen-α-Olefin-Copolymer ein Ethylen/Propylen-Copolymer, ein Ethylen/1-Buten-Copolymer, ein Ethylen/1-Hexen-Copolymer, ein Ethylen/1-Octen-Copolymer, ein Ethylen/Propylen/1-Buten-Copolymer oder ein Ethylen/Propylen/1-Hexen-Copolymer ist.

## Revendications

1. Utilisation d'un film qui comprend un substrat de film de résine thermoplastique, une première couche supplémentaire comprenant une résine (A) et une seconde couche supplémentaire comprenant une résine (B), dans cet ordre, comme film pour stratifié thermique ;
où la résine (A) est une résine d'éthylène ayant une densité de 0,900 à 0,960 g/cm³ et un MFR de 1 à 100 g/10 min, et la résine (B) est un copolymère éthylène-α-oléfine linéaire ayant une densité de 0,870 à 0,910 g/cm³ et un MFR de 1 à 100 g/10 min, le copolymère éthylène-α-oléfine linéaire étant un copolymère d'éthylène avec au moins une α-oléfine ayant 3 à 12 atomes de carbone ; et
où le substrat de film de résine thermoplastique est un film étiré ou non étiré de résine thermoplastique.

2. Utilisation d'un film selon la revendication 1 où le copolymère éthylène-α-oléfine linéaire dans la seconde couche supplémentaire est élué à une température de 80°C ou moins en une quantité de 90 % en masse ou plus sur la base de la masse totale du copolymère, selon une détermination par le procédé de fractionnement par élution à montée de la température (TREF).

3. Utilisation d'un film selon la revendication 1 ou 2 où le copolymère éthylène-α-oléfine linéaire dans la' seconde couche supplémentaire est polymérisé au moyen d'un composé métallocène comme catalyseur de polymérisation.

4. Utilisation d'un film selon l'une quelconque des revendications 1 à 3 où le copolymère éthylène-α-oléfine linéaire est un copolymère éthylène/propylène, un copolymère éthylène/1-butène, un copolymère éthylène/1-hexène, un copolymère éthylène/1-octène, un copolymère éthylène/propylène/1-butène ou un copolymère éthylène/propylène/1-hexène.
